# EUROPEAN PATENT APPLICATION

(11) **EP 4 144 818 A2**
(43) Date of publication of application: **08.03.2023**
(21) Application number: 22193098.5
(22) Date of filing: 31.08.2022
(51) Int. Cl.: C09K 11/66

(54) **METHOD OF EXCHANGING ANIONS OF INORGANIC HALIDE PEROVSKITE NANOPARTICLES USING CATIONIC EFFECT**

(30) Priority: 01.09.2021 KR 20210116319
(71) Applicant: Korea University Research and Business Foundation, Seoul 02841 (KR)
(72) Inventor: OH, Soong Ju, 04587 Seoul (KR); AHN, Jun Hyuk, 04587 Seoul (KR); LEE, Yong Min, 04587 Seoul (KR)
(74) Representative: V.O.

(57) **Abstract**

Disclosed is a method of exchanging the anions of inorganic halide perovskite nanoparticles using cationic effect. More particularly, the method is a cation effect-based anion exchange method of being capable of improving optical stability while controlling the optical band energy of CsPbBr₃ perovskite nanoparticles at room temperature. According to an embodiment of the present disclosure, a cation-anion pair suitable for anion exchange and stability improvement can be provided.

## Description

### CROSS-REFERENCE TO RELATED APPLICATION

This application claims the priority benefit of Korean Patent Application No. 10-2021-0116319, filed on September 01, 2021 in the Korean Intellectual Property Office, the disclosure of which is incorporated herein by reference.

### BACKGROUND OF THE DISCLOSURE

### Field of the Disclosure

The present disclosure relates to a method of exchanging the anions of inorganic halide perovskite nanoparticles, and more particularly to a method of exchanging the anions of inorganic halide perovskite nanoparticles using cationic effect and HSAB theory.

### Description of the Related Art

In recent years, inorganic halide perovskite nanoparticles have attracted a lot of attention. Thereamong, perovskite nanoparticles having ABX₃ composition, for example, CsPbX₃ (X is Cl, Br or I), are a cubic phase having a direct bandgap (direct bandgap), so that the perovskite nanoparticles have good optical properties (photoluminescence (PL) intensity), quantum yields, and the optical band energy can be easily adjusted according to the composition of the perovskite. Based on these characteristics, it is possible to emit light in a visible region from 400 nm to 800 nm depending on the halide composition. This means that the perovskite nanoparticles can be used in light-emitting diodes (LEDs), photodetectors (PDs), color-filters, and the like, making it easy to manufacture various optical and optoelectronic devices. In fact, research on manufacturing LEDs, PDs, solar cells, and light-emitting transistors based on CsPbX₃ perovskite nanoparticles is being actively conducted.

There are two major methods for the halide composition of CsPbX₃ perovskite. First, there is a method of synthesizing CsPbX₃ perovskite nanoparticles whose bandgap is controlled by varying the composition of a precursor for synthesis. Second, there is a method of using a subsequent process of treating halide after synthesis.

A method of manufacturing a precursor with a different composition raises a problem of structural stability. Unlike CsPbBr₃, CsPbCl₃ and CsPbI₃ perovskite nanoparticles are difficult to maintain a cubic structure at room temperature, so that the optical properties thereof can be easily changed to undesirable properties. The two materials undergo rearrangement due to stress caused by lattice mismatch. This entails a spontaneous change from a cubic structure to a monoclinic, tetragonal structure, and non-perovskite structure which do not exhibit superior optical properties.

Anion exchange is a representative method of adjusting a band gap through a subsequent process. In this method, only a halide composition is changed while maintaining the cubic structure of synthesized CsPbBr₃ perovskite nanoparticles. CsPbCl₃ and CsPbI₃ fabricated by the method show high efficiency, only except that the color of emitted light is different, because the cubic structure thereof is not changed. However, since anion-exchanged perovskite has relatively lower oxidative stability and colloidal stability than the CsPbX₃ perovskite immediately after synthesis, an effective anion exchange method is still required.

Many researchers are trying various methods for anion exchange. Since the dispersion of a halide solution is easy to modify the structure of perovskite nanoparticles, there are a gas phase substitution method of being capable of reducing contact with a solution, a method of inserting CsPbX₃ perovskite nanoparticles into a polymer structure to significantly improve stability, and then adding a halide solution, and the like. However, this method is not effective for maintaining the structure of CsPbX₃ perovskite nanoparticles and fabricating a device having excellent optical properties because the method requires harsh chemicals such as hydrochloric acid or heating at a high temperature.

To solve the aforementioned problems, the present inventors have developed a cation effect-based anion exchange method that can improve the optical stability of CsPbBr₃ perovskite nanoparticles while controlling the optical band energy thereof at room temperature. Halogen ions are exchanged with Br ions in the X-site of perovskite nanoparticles to control the band gap, and alkali metal ions (Cs⁺, Na⁺, K⁺, etc.) and ammonium (NH₄⁺) ions adhere to the surface of perovskite nanoparticles to reduce surface defects. In addition, the degree to which halogen ions can be provided to perovskite nanoparticles varies depending on a cation-anion combination. In this study, a cation-anion pair suitable for anion exchange and stability improvement is proposed by optimizing the cation-anion combination.

### [Related Art Document]

### [Patent Document]

Korean Patent No. 10-1986641, "Method of performing anion exchange for halide perovskite nanocrystal"

### SUMMARY OF THE DISCLOSURE

Therefore, the present disclosure has been made in view of the above problems, and it is one object of the present disclosure to solve problems caused by severe conditions and long process time required in an existing anion exchange method for optical bandgap control.

It is another object of the present disclosure to provide a method of effectively performing anion exchange at room temperature while exhibiting optical stability.

In accordance with an aspect of the present disclosure, the above and other objects can be accomplished by the provision of a method of exchanging anions of inorganic halide perovskite nanoparticles, the method including: synthesizing first inorganic halide perovskite nanoparticles of Formula 1 below in which defects are formed; preparing a solution by mixing a halogen salt of Formula 2 below with a polar solvent; and adding the first inorganic halide perovskite nanoparticles to the solution to synthesize second inorganic halide perovskite nanoparticles of Formula 3 below, wherein a bond between AB-X'₃ of the second inorganic halide perovskite nanoparticles is stronger than a bond between C-X' of the halogen salt, so that the anion X of the first inorganic halide perovskite nanoparticles is substituted with the anion X' of the halogen salt,

[Formula 1] ABX₃

[Formula 2] CX'

[Formula 3] ABX'₃

(in Formulas 1 to 3, A is Cs or CH₃NH, B is Pb or Sn, X and X' are halogen anions, C is any one selected from among Cs⁺, Na⁺, K⁺, NH₄⁺ and TBA⁺, and X and X' are different from each other).

In accordance with an embodiment, in the synthesizing of the second inorganic halide perovskite nanoparticles, cations of the halogen salt may be attached to defects of the first inorganic halide perovskite nanoparticles to form nucleation sites.

In accordance with an embodiment, the second inorganic halide perovskite nanoparticles may have a grain size of 10 nm to 20 nm.

In accordance with an embodiment, the synthesizing of the first inorganic halide perovskite nanoparticles may be performed at 10°C to 30°C.

In accordance with an embodiment, the first inorganic halide perovskite nanoparticles of Formula 1 may be CsPbBr₃.

In accordance with an embodiment, the halogen salt may be NaI or NH₄Cl.

In accordance with an embodiment, a concentration of the halogen salt may be 10 mM to 100 mM.

In accordance with an embodiment, the polar solvent may be IPA.

In accordance with an embodiment, the second inorganic halide perovskite nanoparticles may exhibit colloidal stability, so that ligand distribution on surfaces of the nanoparticles is maintained at 60% to 90% in the polar solvent.

In anion-exchanged perovskite nanoparticles according to an embodiment of the present disclosure, the anion-exchanged inorganic halide perovskite nanoparticles are CsPbI₃.

In anion-exchanged perovskite nanoparticles according to an embodiment of the present disclosure, the anion-exchanged inorganic halide perovskite nanoparticles are CsPbCl₃.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1A is a photo showing the emission color characteristics according to a change in the halogen composition of CsPbX₃ perovskite, FIG. 1B illustrates a cubic structure model of CsPbX₃ perovskite, and FIG. 1C is a photo using CsPbX₃ perovskite;
FIG. 2 is a diagram illustrating a method of synthesizing the first inorganic halide perovskite CsPbBr₃ using the re-crystallization method (ligand-assisted re-crystallization method) using a ligand according to Example 1;
FIG. 3 is a diagram comparing the soft/hard degree of cations and anions of halogen salts;
FIG. 4 is a graph showing the relative photoluminescence intensity of CsPbBr₃ perovskite nanoparticles over time;
FIGS. 5A and 5B are graphs showing X-ray diffraction patterns (XRD) of the first inorganic halide perovskite nanoparticles before anion exchange and the second inorganic halide perovskite nanoparticles whose anions are exchanged;
FIG. 6A is a graph showing absorption spectra of CsPbBr₃ perovskite nanoparticles and CsPbBr₃ perovskite nanoparticles to which a halogen salt containing Cl anions is added, and FIG. 6B is a graph showing photoluminescence spectra when a halogen salt is added;
FIG. 7A is a graph showing absorption spectra of CsPbBr₃ perovskite nanoparticles and CsPbBr₃ perovskite nanoparticles to which a halogen salt containing I anions is added, and FIG. 7B is a graph showing photoluminescence spectra when a halogen salt is added;
FIG. 8 is a graph illustrating the photoluminescence measurement results of CsPbBr₃ perovskite nanoparticles;
FIGS. 9A and 9B illustrate photoluminescence spectra when each halogen salt is added by concentration;
FIG. 10 is a diagram illustrating the principle that the cations of a halogen salt applied to CsPbBr₃ perovskite nanoparticles act on defects;
FIG. 11 illustrates transmission electron microscope photographs of inorganic halide perovskite nanoparticles according to embodiments;
FIG. 12 illustrates the photoluminescence of CsPbBr₃ and anion-exchanged CsPbBr₃ in each container; and
FIGS. 13A to 13D illustrate the absorption spectra of perovskite nanoparticles.

### DETAILED DESCRIPTION OF THE DISCLOSURE

The present disclosure will now be described more fully with reference to the accompanying drawings and contents disclosed in the drawings. However, the present disclosure should not be construed as limited to the exemplary embodiments described herein.

The terms used in the present specification are used to explain a specific exemplary embodiment and not to limit the present inventive concept. Thus, the expression of singularity in the present specification includes the expression of plurality unless clearly specified otherwise in context. It will be further understood that the terms "comprise" and/or "comprising", when used in this specification, specify the presence of stated components, steps, operations, and/or elements, but do not preclude the presence or addition of one or more other components, steps, operations, and/or elements thereof.

It should not be understood that arbitrary aspects or designs disclosed in "embodiments", "examples", "aspects", etc. used in the specification are more satisfactory or advantageous than other aspects or designs.

In addition, the expression "or" means "inclusive or" rather than "exclusive or". That is, unless otherwise mentioned or clearly inferred from context, the expression "x uses a or b" means any one of natural inclusive permutations.

In addition, as used in the description of the disclosure and the appended claims, the singular form "a" or "an" is intended to include the plural forms as well, unless context clearly indicates otherwise.

A "defect" refers to a portion, in which the periodicity of atom arrangement is broken, in a perovskite crystal composed of a periodic arrangement of atoms.

In anion exchange of the present disclosure, "exchange" and "substitution" are used interchangeably.

The present disclosure will now be described more fully with reference to the accompanying drawings.

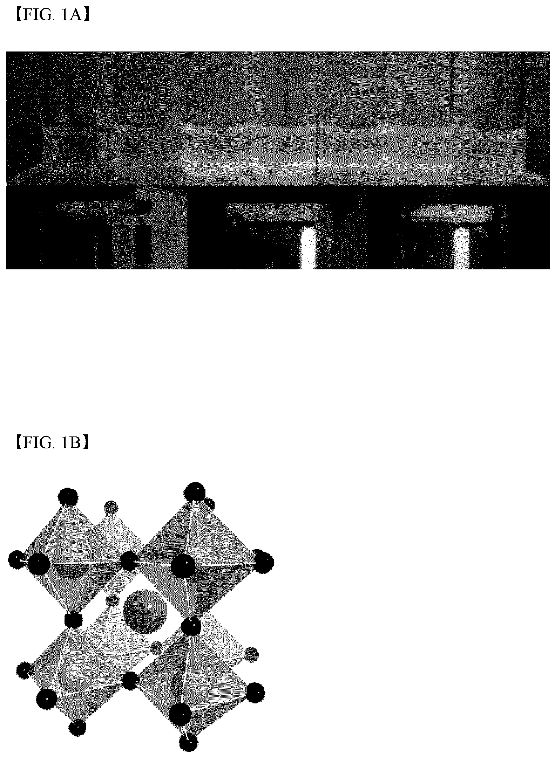

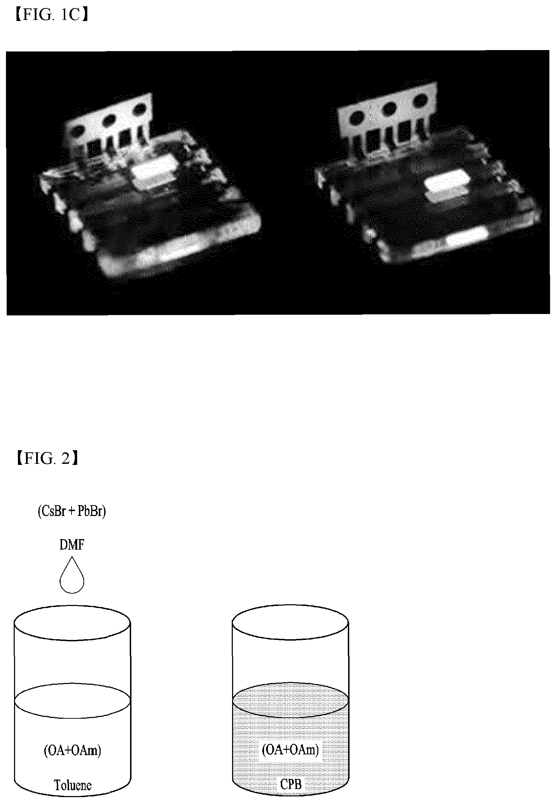

FIG. 1A is cited from Joule, 2018, 2 (10), 2105-2116, and FIG. 1C is cited from Nature Nanotechnology, 2014, 9, 687-692.

Perovskite is a material that is spotlighted in the optical field, and emits light in various visible light regions as shown in FIG. 1A through bandgap adjustment.

Referring to FIG. 1B, inorganic halide perovskite CsPbX₃ (X=Cl, Br, I) has a cubic structure, the blue sphere outside the octahedron represents Cs, the light blue sphere inside the octahedron represents Pb, and the red sphere at each vertex of the octahedron represents X.

The inorganic halide perovskite CsPbX₃ may be applied to LEDs and solar cells as shown in FIG. 1C (left: emits red light, right: emits green light) and the like. CsPbX₃ has advantages in that it has a direct bandgap due to a high emission quantum yield (PLQY), high ion mobility, and a cubic structure. That is, CsPbX₃ exhibits high luminous efficiency because non-radiative recombination does not occur due to the direct bandgap. However, red-emitting CsPbI₃ and blue-emitting CsPbCl₃ do not have a thermodynamic cubic structure when synthesized by an existing hot-injection method, and due to these structural problems, an indirect bandgap and electron loss appear at room temperature. Accordingly, luminous efficiency is decreased.

Anion-exchanged inorganic halide perovskite nanoparticles CsPbCl₃ and CsPbI₃ may be used in a photodetector. In addition, since CsPbI₃ perovskite with secured stability has a multi-layer structure, it may be used in LEDs and solar cells that must be able to withstand processing with various materials.

Therefore, it is necessary to control a bandgap by an anion exchange method. By an anion exchange method, the direct bandgap of CsPbBr₃ can be maintained, the entire visible light range can be covered, and the proportion of halide can be easily controlled. Anion exchange usually occurs in a solution state. At this time, a polar solvent is used to ionize a halide solute that is a target of exchange, and perovskite nanoparticles should be passivated.

On the other hand, inorganic perovskite has a problem in that device performance is reduced due to defects in the material itself, so defect control is essential to manufacture high-performance perovskite solar cells. Conventionally known anion exchange methods have a problem in stability due to defects caused by polar solvents. Since additional processes such as doping are required to control defects, the process is lengthy and inefficient. To achieve defect control while performing anion exchange, the present disclosure uses the hard-soft acid-base (HSAB) theory. Hereinafter, it is referred to as the HSAB theory. By using the HSAB theory, perovskite may be passivated with the cations of a target halide to prevent a phase change from occurring, and colloidal stability may be maintained because a surface ligand is not affected.

Specifically, the method of exchanging anions of inorganic halide perovskite nanoparticles of the present disclosure is largely divided into two steps. The first step is a step of synthesizing first inorganic halide perovskite nanoparticles with defects having an ABX₃ (A is Cs or CH₃NH, B is Pb or Sn, and X is a halogen anion) composition. The second step is a step of preparing a solution by mixing a halogen salt having a CX' (C is any one selected from among Cs⁺, Na⁺, K⁺, NH₄⁺ and TBA⁺, X' is a halogen anion, and X and X' are different from each other) composition and a polar solvent and adding the first inorganic halide perovskite nanoparticles to the solution to synthesize second inorganic halide perovskite nanoparticles having an ABX'₃ composition. By the method of exchanging anions of inorganic halide perovskite nanoparticles, the bond between AB-X'₃ of the second inorganic halide perovskite nanoparticles is stronger than the bond between C-X' of the halogen salt, so that the anion X of the first inorganic halide perovskite nanoparticles is substituted with the anion X' of the halogen salt.

In the first step of synthysizing inorganic halide perovskite nanoparticles, first inorganic halide perovskite nanoparticles having ABX₃ composition may be preferably CsPbBr₃. The synthesis is performed at 10°C to 30°C, preferably 25°C. The synthesis of the inorganic halide perovskite is performed at room temperature to form a number of defects on the surface of the first inorganic halide perovskite nanoparticles using a ligand-assisted re-crystallization method.

While the crystal structure of inorganic halide perovskite having many defects cannot be maintained for a day due to poor oxidative stability and, when a polar solvent is added, cannot withstand even a few minutes and is destroyed, the present disclosure overcomes the problems through the cationic effect. In summary, it is a unique feature of the present disclosure that defects are artificially induced by a room-temperature solution process method so as to further maximize the cationic effect.

In the second step of synthesizing second inorganic halide perovskite nanoparticles by adding the first inorganic halide perovskite nanoparticles to a solution in which a halogen salt and a polar solvent are mixed, the halogen salt may be NaI or NH₄Cl. The reason why anion exchange occurs well when NaI or NH₄Cl is used as a cation-anion combination of a halogen salt can be explained by the HSAB theory. According to the theory, since TBAC or NaI is well ionized, cations exhibit a cationic effect in the defects of the first inorganic halide perovskite, and are suitable for anion substitution. However, anion exchange does not actually occur when TBAC is used although this is an example applied to NaI. The reason is that TBA⁺ cannot passivate defects on the surface of perovskite due to the large molecular size thereof. Therefore, the next most ionizable combination, NH₄Cl, is selected for anion exchange.

In addition, the concentration of the halogen salt is 10 mM to 100 mM, preferably 20 mM to 40 mM. When the concentration of the halogen salt is less than 10 mM, the surface defects of the perovskite nanoparticles are not protected by the cations of the halogen salt, so the nanoparticles are unstable and may be destroyed. Accordingly, the anion exchange of the perovskite does not occur well. On the other hand, when the concentration of the halogen salt is 100 mM or more, anion exchange occurs too quickly due to the high concentration, making it difficult to control the halogen composition of the inorganic halide perovskite.

In the solution in which the halogen salt and a polar solvent are mixed, the polar solvent is preferably IPA. When the polarity of water is 100, IPA has a moderate polarity of about 54, so IPA has the characteristics of both a polar solvent and a non-polar solvent. In addition, IPA can be dissociated in the form of RO- to promote the ionization and cationic effect of a solute, so it can help anion exchange unlike other polar solvents.

In the process of exchanging anions, the cations of the halogen salt are attached to the defects of the first inorganic halide perovskite nanoparticles and act as nucleation sites. The cations serving as the nucleation point of the first inorganic halide perovskite nanoparticles become additional growth points of the second inorganic halide perovskite nanoparticles. The second inorganic halide perovskite nanoparticles grown in this way have a grain size of 10 nm to 20 nm. In a solar cell, the grain size of a material is very important for electron/hole mobility, and such growth may increase the grain size, thereby improving the performance of optical and optoelectronic devices.

In addition, the cations serve to increase the stability of the perovskite structure by reducing surface defects. The roles of cations as described above are collectively referred to as "cationic effect." The second inorganic halide perovskite nanoparticles exhibit colloidal stability even in a polar solvent due to the cationic effect. The term "colloidal stability" means that perovskite nanoparticles in a solution are well wrapped with oleic acid (OA) and oleylamine (OAm) ligands used for synthesis. Originally, perovskite nanoparticles have very poor colloidal stability because the perovskite nanoparticles occupy a place where oxygen should have been combined with oleic acid or oleylamine in an oxygen environment. changed or decomposed, and are converted into a bulk material or decomposed within one to one week after the perovskite is synthesized.

In the present disclosure, it can be seen that colloidal stability is maintained in that the ligand distribution on the surfaces of the second inorganic halide perovskite particles is maintained in a range of 60% to 90% in the polar solvent. As such, since the colloidal stability of the perovskite nanoparticles is maintained, a solution process may be used for synthesizing the perovskite. That is, a thin-film device can be simply manufactured through spin coating after spraying a solution on a desired substrate, and a large-area device can also be manufactured using the thin-film device.

Hereinafter, the present disclosure will be described in more detail with reference to the following Examples. It will be apparent to those skilled in the art that Examples are merely for concretely explaining the disclosure and therefore, there is no intent to limit the disclosure to Examples.

### [Comparative Example 1] Synthesis of CsPbBr₃ nanoparticles - high temperature

200 mg of CsCO₃, 10 ml of 1-Octadecene (1-ODE), and 0.6 ml of oleic acid (OA) were put into a 25 ml 3-neck flask, and then vacuum was held at 120 °C for 1 hour with stirring. Next, Ar flowed and the temperature was maintained at 150°C for 20 minutes to synthesize Cs-oleate, and the temperature was lowered to 70 to 110°C.

655 mg of PbBr₂, 50 ml of 1-ODE, 5 ml of oleic acid, and 5 ml of oleylamine (OAm) were put into a 100 ml three-necked flask, and then vacuum was held at 120 °C for 1 hour with stirring. Next, Ar flowed and the temperature was raised to 130 to 170°C, and then the previously synthesized Cs-oleate was injected to maintain the temperature for 10 minutes, and then heating was terminated.

The synthesized perovskite CsPbBr₃ nanoparticles were centrifuged with an excess of anti-solvent to sink, and then the supernatant was removed and dispersed in an organic solvent.

Comparative Example 1 corresponds to a method of synthesizing CsPbBr₃ perovskite using a hot injection method, and since the synthesis is performed at a high temperature, it shows very few defects and thus has high stability.

### [Example 1] Synthesis of CsPbBr₃ nanoparticles - room temperature

A CsPbBr₃ precursor was prepared by adding CsBr and PbBr₂ to an N,N-dimethylformamide (DMF) solvent and then stirring for at least one day. The CsPbBr₃ precursor was mixed with organic ligands, oleic acid, and oleylamine, and an organic solvent, toluene, was added thereto, thereby preparing a mixed solution. The mixed solution was stirred for 2 minutes to synthesize CsPbBr₃ perovskite nanoparticles in a colloidal state.

The CsPbBr₃ perovskite nanoparticles in the colloidal state were mixed with a methyl acetate solvent and centrifuged such that the nanoparticles had a uniform size. Next, the sunken perovskite nanoparticles were discarded, and particles of uniform size were collected. A colloidal CsPbBr₃ perovskite nanoparticle solution was prepared by dispersing the uniform perovskite nanoparticles in hexane.

Since the hexane is a non-polar solvent, it is possible to well disperse the perovskite nanoparticles surrounded by oleic acid and oleamine which are non-polar due to a long carbon chain. Accordingly, an even thin film can be produced when manufacturing a device in a subsequent process.

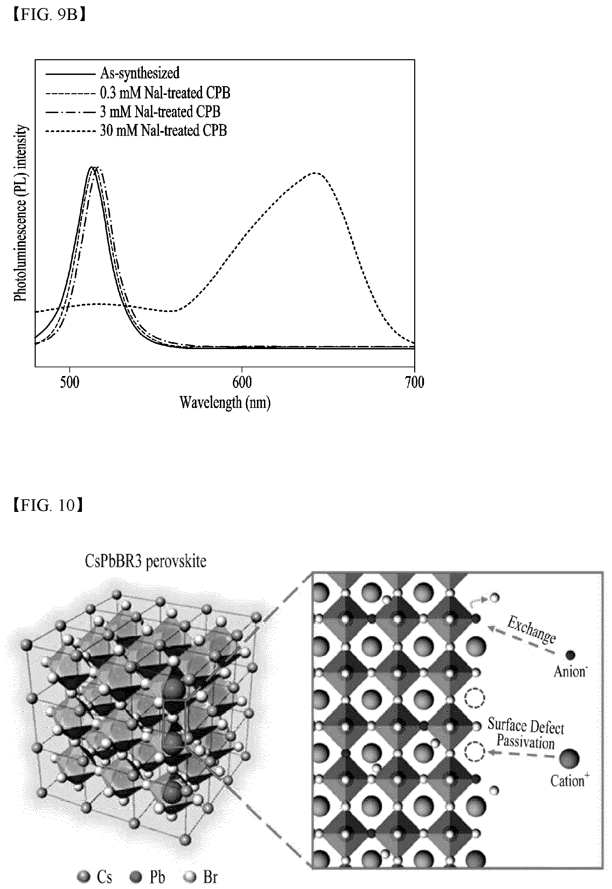

CsPbBr₃ nanoparticles synthesized according to Example 1 had defects on the surfaces thereof. The defects are shown by the circular dotted line on the right side of FIG. 10.

### [Comparative Example 2-1] Anion exchange - TBAC

A halogen salt TBAC was prepared for anion exchange of the perovskite nanoparticles synthesized according to Example 1. Each halogen salt solute was dissolved in an iso-propanol (IPA) solvent to a concentration of 30 mM. The dissolved halide solution was mixed with a solution of colloidal CsPbBr₃ perovskite nanoparticles dissolved in hexane as an organic solvent.

### [Comparative Example 2-2] Anion exchange - NaCl

The experiment was carried out in the same manner as in Comparative Example 2-1, except that NaCl was used instead of TBAC as the halogen salt in Comparative Example 2-1.

### [Comparative Example 2-3] Anion exchange - TBAI

The experiment was carried out in the same manner as in Comparative Example 2-1, except that TBAI was used instead of TBAC as the halogen salt in Comparative Example 2-1.

### [Comparative Example 2-4] Anion exchange - NH₄I

The experiment was carried out in the same manner as in Comparative Example 2-1, except that NH₄I was used instead of TBAC as the halogen salt in Comparative Example 2-1.

### [Example 2-1] Anion exchange - NH₄Cl

The experiment was carried out in the same manner as in Comparative Example 2-1, except that NH₄Cl was used instead of TBAC as the halogen salt in Comparative Example 2-1.

### [Example 2-2] Anion exchange - NaI

The experiment was carried out in the same manner as in Comparative Example 2-1, except that NaI was used instead of TBAC as the halogen salt in Comparative Example 2-1.

Examining the results of anion exchange conducted according to Comparative Examples 2-1 to 2-4 and Examples 2-1 and 2-2, anion exchange was successful only in Example 2-1 (using NH₄Cl as a halogen salt) and Example 2-2 (using NaI as a halogen salt), so that CsPbI₃ and CsPbBr₃ perovskite nanoparticles were respectively produced. In the remaining mixed solutions, no anion exchange was observed.

FIG. 2 is a diagram illustrating a method of synthesizing the first inorganic halide perovskite CsPbBr₃ using the re-crystallization method (ligand-assisted re-crystallization method) according to Example 1. In the case of the hot injection method among inorganic halide perovskite synthesis methods, synthesis is performed at 150 °C or higher and very few defects are generated, so that highly stable perovskite can be synthesized. The present disclosure uses a room temperature solution process method of performing synthesis at room temperature of about 25 °C under atmospheric conditions, unlike the hot injection method, to artificially induce defects and further maximize the cationic effect. When manufacturing a perovskite-based optical and optoelectronic device using the solution process, the cost can be greatly reduced because mass production is easy and it is possible to manufacture a large area.

Referring to FIG. 2, the drawing on the left shows a mixture prepared by adding CsBr and PbBr₂ to a dimethylformamide (DMF) solvent, and then mixing the same with organic ligands oleic acid (OA) and oleylamine (OAm), and then adding the same to an organic solvent, toluene. Colloidal CsPbBr₃ perovskite nanoparticles (CPB) illustrated in the drawing on the right by stirring the mixture are synthesized. The synthesized CsPbBr₃ nanoparticles have many defects on the surfaces thereof.

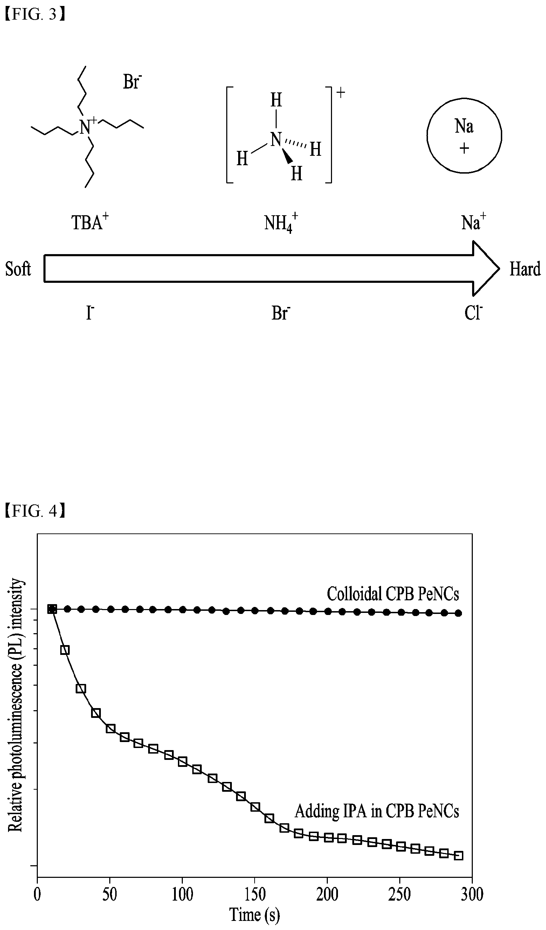

In FIG. 3, soft/hard degrees are compared for various ions. A compound having a small size, high charge state, and weak polarity is called "hard", and a compound having a large size, low charge state, and strong polarity is called "soft". According to the hard-soft acid-base (HSAB) theory, soft acids react faster with soft bases and form stronger bonds therewith, and the same applies to hard acids and hard bases.

Referring to FIG. 3, it can be seen that the hard bases (hard cations) are in the order of TBA⁺, NH4⁺, and Na⁺, and the hard acids (hard anions) are in the order of I⁻, Br⁻, and Cl⁻. If applying the HSAB theory to this, it can be predicted that a combination of hard cations - hard anions or a combination of soft cations - soft anions has strong bonds, so it is difficult to ionize the combinations, and conversely, a combination of hard cations - soft anions or a combination of soft anions - hard cations has good ionization.

Therefore, ionization would occur well in the order of TBAC, NH₄Cl, and NaCl among cation-anion combinations (halogen salt combinations) containing Cl anions, and ionization would occur well in the order of NaI, NH₄I, and TBAI among cation-anion combinations (halogen salt combinations) containing I anions. The better the ionization, the better the halogen anions can be provided to the inorganic halide perovskite.

FIG. 4 is a graph illustrating relative photoluminescence intensity over time. Referring to the graph, the yellow-green line, Colloidal CPB PeNCs, means CsPbBr₃ perovskite dispersed in a solution. The cyan line, Adding IPA in CPB PeNCs, means that IPA was added to the CsPbBr₃ perovskite in a colloidal state. The CsPbBr₃ perovskite in the colloidal state has little change in photoluminescence intensity over time. On the other hand, it can be seen that the photoluminescence intensity of CsPbBr₃ perovskite nanoparticles to which IPA was added rapidly decreases over time. In general, polar solvents such as methanol, ethanol, and IPA are considered harsh chemicals that cause defects in the structure of CsPbBr₃ perovskite and eventually destroy perovskite nanoparticles. Here, "destroy" has the following meanings. The "destroy" means that the oleic acid and oleylamine ligands cannot bind to the surfaces of the nanoparticles due to the defects so that the nanoparticles are agglomerated and become a bulk material of several micrometers or more. It also means that the nanoparticles are decomposed and specific physical properties or specific structures do not appear.

In the present disclosure, IPA serves two roles. First, as described above, a polar solvent, IPA, induces defects in the perovskite structure and creates many defect sites, thereby making the cations of the halogen salt more actively passivate. Second, as IPA has a medium polarity while ionizing a halogen salt into cations and anions, it serves to allow the cations and anions to access the perovskite nanoparticles bound to oleic acid and oleylamine ligands in a non-polar hexane solution.

Hereinafter, drawings are briefly described.

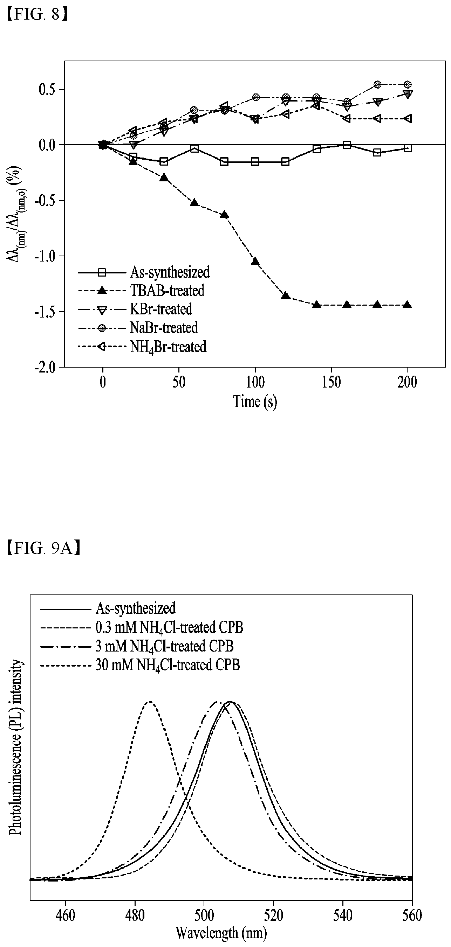

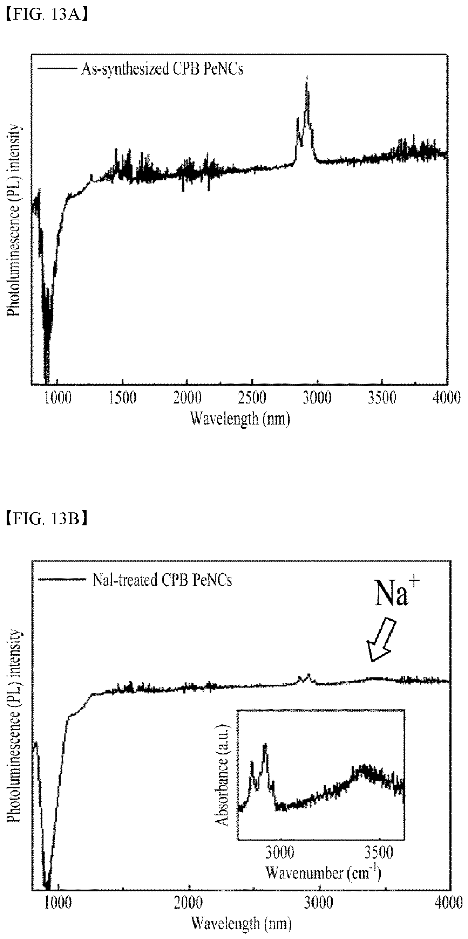

In FIGS. 9A, 9B and 13A to 13D, CPB means CsPbBr₃, CPC means CsPbCl₃, and CPI means CsPbI₃.

In FIGS. 13A to 13D, PeNCs means perovskite nanoparticles.

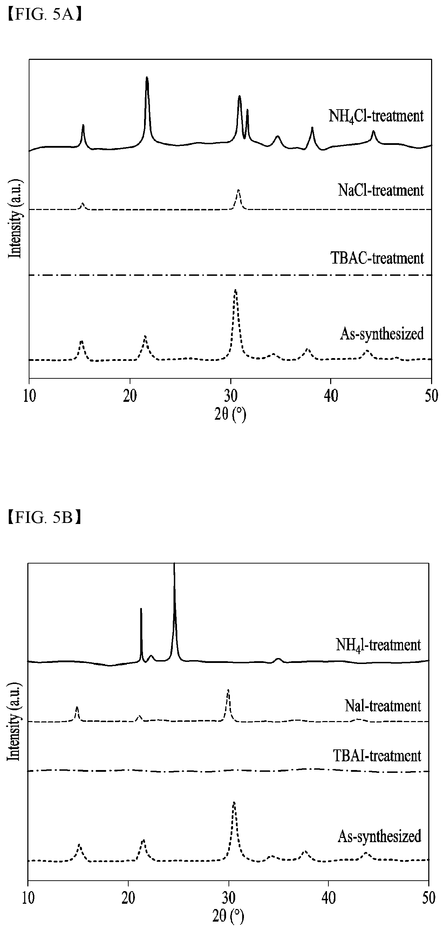

In FIGS. 5A, 5B, 6A, 6B, 7A, 7B, 8, 9A, 9B, 11, 13A and 13D, "As-synthesized" means CsPbBr₃ to which a halogen salt is not applied, which corresponds to Example 1.

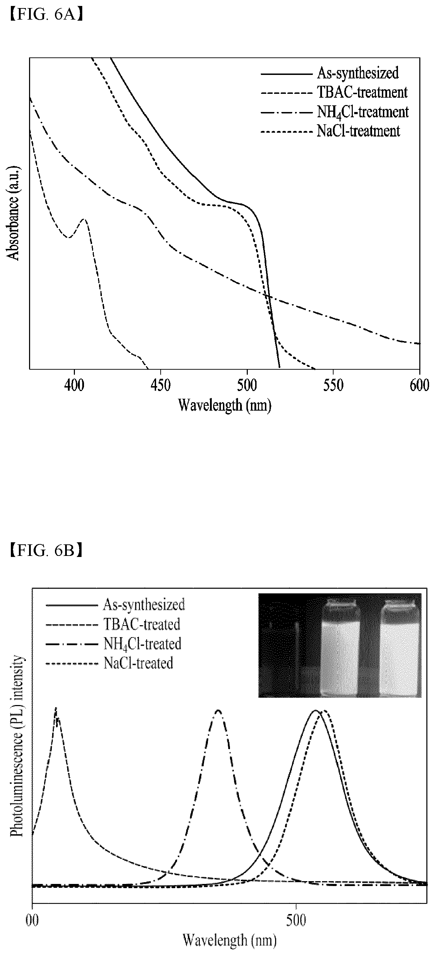

In FIGS. 5A, 6A, and 6B, "TBAC-treatment (treated)" means CsPbBr₃ perovskite nanoparticles treated with TBAC, which corresponds to Comparative Example 2-1.

In FIGS. 5A, 6A, and 6B, "NaCl-treatment (treated)" means CsPbBr₃ perovskite nanoparticles treated with NaCl, which corresponds to Comparative Example 2-2.

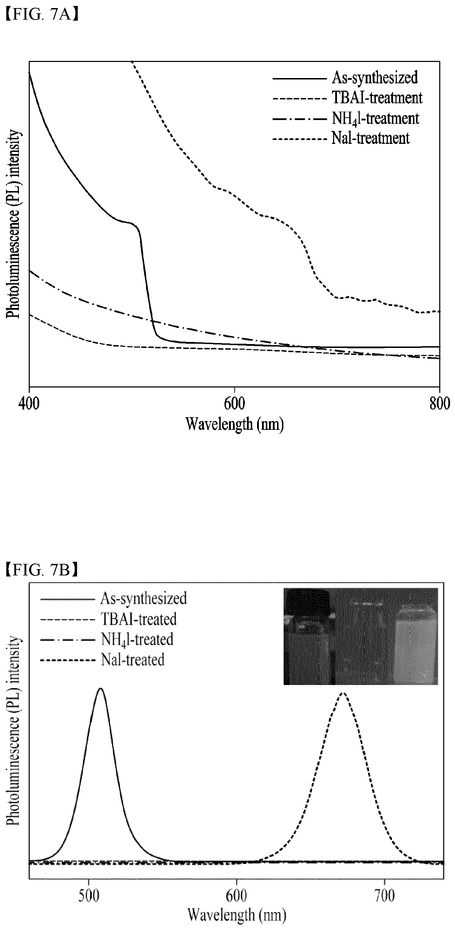

In FIGS. 5B, 7A, and 7B, "TBAI-treatment (treated)" means CsPbBr₃ perovskite nanoparticles treated with TBAI, which corresponds to Comparative Example 2-3.

In FIGS. 5B, 7A, and 7B, "NH₄I-treatment (treated)" means CsPbBr₃ perovskite nanoparticles treated with NH₄I, which corresponds to Comparative Example 2-4.

In FIGS. 5A, 6A, 6B, 11, 13C and 13D, NH₄Cl-treatment (treated) means CsPbBr₃ perovskite nanoparticles treated with NH₄Cl, which corresponds to Example 2-1.

In FIGS. 5B, 7A, 7B, 11, 13B and 13D, "Nal-treatment (treated)" means CsPbBr₃ perovskite nanoparticles treated with NaI, which corresponds to Example 2-2.

In FIG. 8, "TBAB-treated" means CsPbBr₃ perovskite nanoparticles treated with TBAB.

In FIG. 8, "KBr-treated" means CsPbBr₃ perovskite nanoparticles treated with KBr.

In FIG. 8, "NaBr-treated" means CsPbBr₃ perovskite nanoparticles treated with NaBr.

In FIG. 8, "NH₄Br-treated" means CsPbBr₃ perovskite nanoparticles treated with NH₄Br.

In FIG. 9A, "0.3 mM NH₄Cl-treated CPB" means CsPbBr₃ perovskite nanoparticles treated with 0.3 mM NH₄Cl.

In FIG. 9A, "3 mM NH₄Cl-treated CPB" means CsPbBr₃ perovskite nanoparticles treated with 3 mM NH₄Cl.

In FIG. 9A, "30 mM NH₄Cl-treated CPB" means CsPbBr₃ perovskite nanoparticles treated with 30 mM NH₄Cl.

In FIG. 9B, "0.3 mM NaI-treated CPB" means CsPbBr₃ perovskite nanoparticles treated with 0.3 mM NaI.

In FIG. 9B, "3 mM NaI-treated CPB" means CsPbBr₃ perovskite nanoparticles treated with 3 mM NaI.

In FIG. 9B, "30 mM NaI-treated CPB" means CsPbBr₃ perovskite nanoparticles treated with 30 mM NaI.

FIGS. 5A and 5B are graphs showing X-ray diffraction patterns (XRD) of the first inorganic halide perovskite nanoparticles before anion exchange and the second inorganic halide perovskite nanoparticles whose anions are exchanged. Referring to the graph on the left, the X-ray diffraction patterns are shown in the order of CsPbBr₃ perovskite nanoparticles, to which NH4Cl, NaCl, and TBAC are respectively added, and CsPbBr₃ perovskite nanoparticles before the addition of halogen salt from above. Referring to the graph on the right, the X-ray diffraction patterns are shown in the order of CsPbBr₃ perovskite nanoparticles, to which NH4I, NaI, and TBAI are respectively added, and CsPbBr₃ perovskite nanoparticles before the addition of halogen salt from above. When treated with NH₄Cl and NaI, the anion-exchanged CsPbCl₃ and CsPbI₃ show the same cubic structure peak as CsPbBr₃. On the other hand, when treated with TBAC and TBAI, both the structures are destroyed and decomposed, and therefore no peaks appear. When treated with NaCl and NH₄I, it can be seen that the cubic structure is destroyed and transformed into another structure such as an orthorhombic system.

FIG. 6A is a graph showing absorption spectra of CsPbBr₃ perovskite nanoparticles and CsPbBr₃ perovskite nanoparticles to which a halogen salt containing Cl anions is added. FIG. 6B is a graph showing photoluminescence (PL) spectra of CsPbBr₃ perovskite nanoparticles and CsPbBr₃ perovskite nanoparticles to which a halogen salt containing Cl anions is added. The photograph in the upper right of FIG. 6b shows an inorganic halide perovskite under photoluminescence.

Referring to FIGS. 6A and 6B, absorption and photoluminescence spectra of CsPbBr₃ perovskite nanoparticles before halogen salt addition and CsPbBr₃ perovskite nanoparticles added with each of TBAC, NH₄Cl, and NaCl are shown. In FIGS. 6A and 6B, the CsPbBr₃ perovskite nanoparticles added with NH₄Cl will have a blue color because a peak appears at a wavelength of around 450 nm, which can be seen in the center of the photo in the upper right of FIG. 6B. The CsPbBr₃ perovskite nanoparticles added with NaCl and the CsPbBr₃ perovskite nanoparticles before addition of a halogen salt will emit green light because a peak appears at a wavelength of around 500 nm, which can be seen on the right side of the photo. The CsPbBr₃ perovskite nanoparticles added with TBAC undergo anion exchange, but are rapidly destroyed because defect passivation is impossible due to the large size of TBA⁺. Therefore, a small peak that it is difficult to identify appears at a wavelength around 400 nm. In the case of the TBAC-treated peak in FIG. 6B, the peak at the violet wavelength is prominent because normalization was performed, but there is actually no color as shown on the left side of the photo.

In inorganic halide perovskite, the band gap is adjusted according to the type of halogen it possesses, and the color of the emitted light changes. Therefore, it can be known through the wavelength of absorbed light whether the anion exchange has been successful. When NH₄Cl is added to greenish CsPbBr₃ perovskite nanoparticles, blue appears, which indicates that anions are exchanged from Br⁻ to Cl⁻ to form CsPbCl₃ perovskite nanoparticles. However, when NaCl is added, an anion is not exchanged with Cl⁻, so the green color of the existing CsPbBr₃ perovskite appears. When TBAC is added, the perovskite structure is destroyed and no color appears.

Based on the HSAB theory, anion exchange should be best performed when TBAC is added, but TBA+ cannot passivate the defects of the perovskite due to the large molecular size thereof. When NH₄Cl, which ionizes well next to TBA⁺, was added, anion exchange was easily performed. Accordingly, it can be confirmed that the molecular size also affects the cation effect. In addition, when NaCl is added, the provision of halogen anions does not occur well because it is a combination of hard acid-hard anions, indicating that anion exchange has failed.

FIG. 7A is a graph showing absorption spectra of CsPbBr₃ perovskite nanoparticles and CsPbBr₃ perovskite nanoparticles to which a halogen salt containing I anions is added. FIG. 7B is a graph showing photoluminescence (PL) spectra of CsPbBr₃ perovskite nanoparticles and CsPbBr₃ perovskite nanoparticles to which a halogen salt containing I anions is added. The photograph in the upper right of FIG. 7b shows an inorganic halide perovskite under photoluminescence.

Referring to FIGS. 7A and 7B, the absorption and photoluminescence spectra of CsPbBr₃ perovskite nanoparticles added with each of TBAI and NH₄I, CsPbBr₃ perovskite nanoparticles before the addition of a halogen salt, and CsPbBr₃ perovskite nanoparticles added with NaI are shown. In FIGS. 7A and 7B, the CsPbBr₃ perovskite nanoparticles added with TBAI and the CsPbBr₃ perovskite nanoparticles added with NH₄I show no peak. It can be seen that the CsPbBr₃ perovskite nanoparticles before the addition of a halogen salt emit green light because a peak appears at a wavelength of around 500 nm, and the CsPbBr₃ perovskite nanoparticles added with NaI emit red light because a peak appears at a wavelength of around 660 nm. This can also be confirmed in the upper right photo of FIG. 7B. TBAI, NH₄I, and NaI are placed sequentially from the left, TBAI and NH₄I do not emit light, and NaI emits red light.

According to the HSAB theory, I anion exchange was successfully performed when NaI, which is well ionized, was added to the CsPbBr₃ perovskite nanoparticles, confirming that the composition was changed to the red-colored CsPbI₃ perovskite nanoparticles. TBAI cannot passivate defects due to the large size of TBA⁺, and NH₄I cannot fill defect sites because they ionize well, and peaks do not appear because the particles are destroyed by the polar solvent.

FIG. 8 is a graph of illustrating the photoluminescence measurement results of CsPbBr₃ perovskite nanoparticles.

FIG. 8 illustrates the results of adding TBAB, KBr, NaBr, and NH₄Br having Br ions, which are halide ions of CsPbBr₃, and having different cations. The y-axis of the graph appears as + when the wavelength is red-shifted from the existing peak in photoluminescence (PL), and - when the wavelength is blue-shifted. When there is no change in the halide of the perovskite, the red shift of the nanoparticles means that the size of the nanoparticles increases, and the blue shift means that the particles become smaller. When each of KBr, NaBr, and NH₄Br was added to the CsPbBr₃ perovskite, a very fine red shift occurred. Through this, it can be seen that the cations of the halogen salt were bonded to the defect sites of the CsPbBr₃ perovskite nanoparticles, resulting in fine growth. On the other hand, it was blue-shifted when TBAB was added. Through this, it can be seen that the perovskite particles were destroyed because TBA⁺ could not bind to the defect sites of the perovskite due to the large size of TBA⁺.

Referring to Figure 9A, 0.3 mM, 3mM, and 30mMNH₄Cl were respectively used, and when 0.3mM and 3mM NH₄Cl were respectively added to CsPbBr₃ perovskite, graphs that are similar to the photoluminescence graph of CsPbBr₃ perovskite to which a halogen salt is not added are shown. From this, it can be seen that Cl anion exchange did not occur. On the other hand, when 30 mM of H₄Cl was added, the peak of the graph shifted from green 510 nm to blue 480 nm, which indicates that anion exchange into CsPbCl₃ occurred.

Referring to Figure 9B, 0.3 mM, 3mM, and 30mM NaI were respectively used, and when 0.3mM and 3mM NaI were respectively added to CsPbBr₃ perovskite, graphs that are similar to the photoluminescence graph of CsPbBr₃ perovskite to which a halogen salt is not added are shown. From this, it can be seen that I anion exchange did not occur. On the other hand, when 30 mM of NaI was added, the peak of the graph shifted from green 510 nm to red 650 nm, which indicates that anion exchange into CsPbI₃ occurred.

FIG. 10 is a diagram illustrating the principle that the cations of a halogen salt applied to CsPbBr₃ perovskite nanoparticles act on defects. Referring to FIG. 10, the cations bind to the surface defects of CsPbBr₃ perovskite and passivate them to prevent penetration of the polar solvent, and furthermore, to protect the surface through perovskite particle growth.

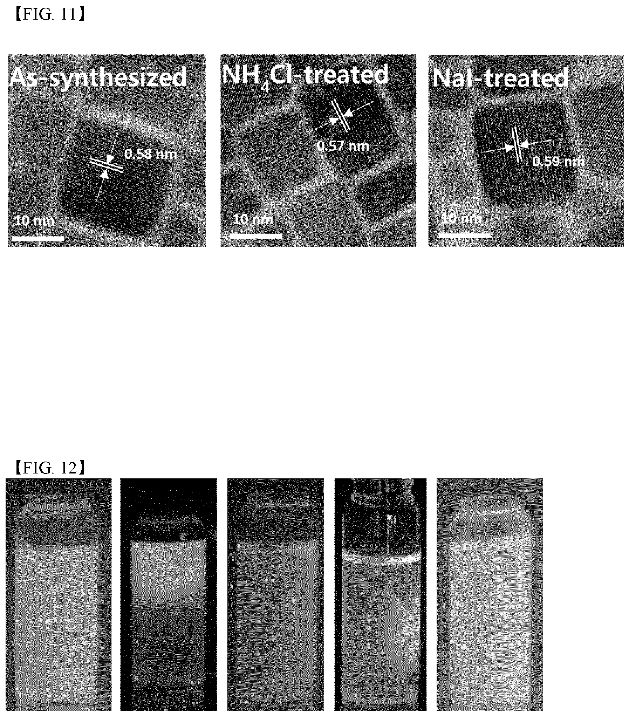

FIG. 11 illustrates transmission electron micrographs of inorganic halide perovskite nanoparticles according to embodiments. The first photo shows CsPbBr₃ nanoparticles synthesized according to Example 1, the second photo shows a case where CsPbBr₃ is anion-exchanged into CsPbCl₃ by adding NH₄Cl according to Example 2-1, and the third photo shows a case where CsPbBr₃ is anion-exchanged into CsPbI₃ by adding NaI according to Example 2-2. Referring to FIG. 11, it can be seen that the lattice spacing is changed by anion exchange. The lattice spacing of the CsPbBr₃ perovskite nanoparticles was 0.58 nm, the lattice spacing of Cl anion-exchanged CsPbI₃ perovskite nanoparticles was decreased to 0.57 nm, and the lattice spacing of I anion-exchanged CsPbI₃ perovskite nanoparticles was increased to 0.59 nm. The lattice spacing of nanoparticles was changed according to the size of Cl, Br, and I ions.

Through the cationic effect, the cations of the halogen salt fill the defects of the perovskite nanoparticles and act as nucleation sites, so that the growth of the particles occurs. Accordingly, the surface of the perovskite nanoparticles is passivated, and colloidal stability is also improved.

According to the cationic effect, the defective perovskite nanoparticles maintain colloidal stability even in IPA. Referring to the second and fourth photos of FIG. 12, it can be confirmed that the colloidal stability is maintained as all three colors appear in one container. The blue container in the first photo shows CsPbCl₃ anion-exchanged from CsPbBr₃, the green container in the third photo shows CsPbBr₃, and the red container in the fifth photo shows CsPbI₃ anion-exchanged from CsPbBr₃.

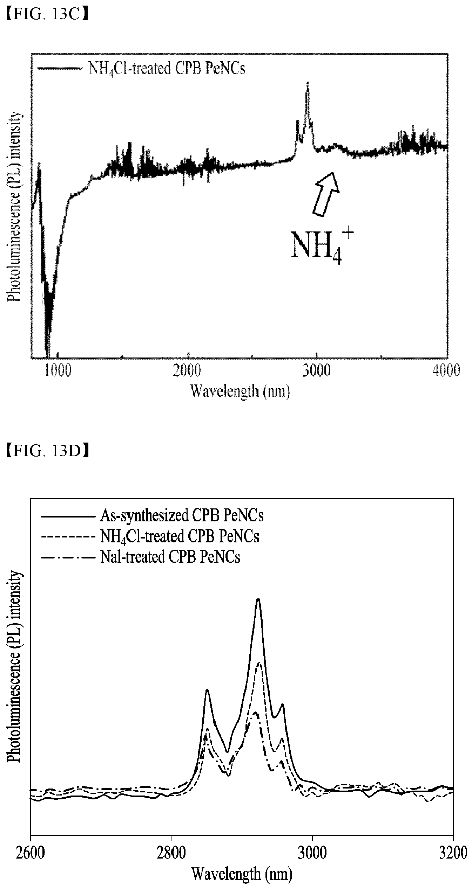

FIGS. 13A to 13D illustrate the FT-IR graphs of CbPbBr₃ perovskite nanoparticles. It can be seen through FT-IR whether colloidal stability is maintained in a solution. FIG. 13A illustrates an absorption spectrum of CsPbBr₃ perovskite nanoparticles before anion exchange. FIG. 13B illustrates an absorption spectrum of CsPbBr₃ perovskite nanoparticles, to which NaI is applied, and a Na⁺ peak, and FIG. 13C illustrates an absorption spectrum of CsPbBr₃ perovskite nanoparticles, to which NH₄Cl is added, and NH₄⁺ peak. This indicates that anion exchange successfully occurred.

FIG. 13D is a combination of peaks in the range of 2900 to 3100 nm⁻¹ in FIGS. 13A to 13C. In all three graphs, 2900 to 3100 nm⁻¹ peaks appear, which means that C-H stretch bonding exists. That is, C-H stretch bonding was maintained even after anion exchange occurred. The anion exchange means that colloidal stability is maintained. To maintain colloidal stability, the perovskite nanoparticles in a solution should be well surrounded by oleic acid (OA) and oleylamine (OAm) ligands, so it can be seen that the bonding is C-H stretch bonding of oleic acid and oleylamine.

According to the present disclosure, the performance of optical and optoelectronic devices based on inorganic halide perovskite can be improved.

According to the present disclosure, the cost required for manufacturing perovskite-based optical and optoelectronic devices can be significantly reduced.

According to the present disclosure, since the colloidal stability of perovskite nanoparticles is maintained, a thin film-type and large-area device can be manufactured through a solution process.

Although the present disclosure has been described through limited examples and figures, the present disclosure is not intended to be limited to the examples. Those skilled in the art will appreciate that various modifications, additions and substitutions are possible, without departing from the scope and spirit of the disclosure. Therefore, it should be understood that there is no intent to limit the disclosure to the embodiments disclosed, rather, the disclosure is to cover all modifications, equivalents, and alternatives falling within the spirit and scope of the disclosure as defined by the claims.

## Claims

1. A method of exchanging anions of inorganic halide perovskite nanoparticles, the method comprising:
synthesizing first inorganic halide perovskite nanoparticles of Formula 1 below in which defects are formed;
preparing a solution by mixing a halogen salt of Formula 2 below with a polar solvent; and
adding the first inorganic halide perovskite nanoparticles to the solution to synthesize second inorganic halide perovskite nanoparticles of Formula 3 below,
wherein a bond between AB-X'₃ of the second inorganic halide perovskite nanoparticles is stronger than a bond between C-X' of the halogen salt, so that the anion X of the first inorganic halide perovskite nanoparticles is substituted with the anion X' of the halogen salt,
[Formula 1] ABX₃
[Formula 2] CX'
[Formula 3] ABX'₃
(in Formulas 1 to 3, A is Cs or CH₃NH, B is Pb or Sn, X and X' are halogen anions, C is any one selected from among Cs⁺, Na⁺, K⁺, NH₄⁺ and TBA⁺, and X and X' are different from each other).

2. The method according to Claim 1, wherein in the synthesizing of the second inorganic halide perovskite nanoparticles, cations of the halogen salt are attached to defects of the first inorganic halide perovskite nanoparticles to form nucleation sites.

3. The method according to Claim 1, wherein the second inorganic halide perovskite nanoparticles has a grain size of 10 nm to 20 nm.

4. The method according to Claim 1, wherein the synthesizing of the first inorganic halide perovskite nanoparticles is performed at 10°C to 30°C.

5. The method according to Claim 1, wherein the first inorganic halide perovskite nanoparticles of Formula 1 are CsPbBr₃.

6. The method according to Claim 1, wherein the halogen salt is NaI or NH₄Cl.

7. The method according to Claim 1, wherein a concentration of the halogen salt is 10 mM to 100 mM.

8. The method according to Claim 1, wherein the polar solvent is IPA.

9. The method according to Claim 1, wherein the second inorganic halide perovskite nanoparticles exhibit colloidal stability, so that ligand distribution on surfaces of the nanoparticles is maintained at 60% to 90% in the polar solvent.

10. Inorganic halide perovskite nanoparticles anion-exchanged according to the method of Claim 1, wherein the anion-exchanged inorganic halide perovskite nanoparticles are CsPbI₃.

11. Inorganic halide perovskite nanoparticles anion-exchanged according to the method of Claim 1, wherein the anion-exchanged inorganic halide perovskite nanoparticles are CsPbCl₃.
